# EUROPEAN PATENT SPECIFICATION

(11) **EP 4 266 602 B1**
(45) Date of publication and mention of the grant of the patent: **03.06.2026**
(21) Application number: 23168531.4
(22) Date of filing: 18.04.2023
(51) Int. Cl.: H04B 17/318, H04B 17/345, H04W 74/0808, H04W 84/12

(54) **METHOD AND APPARATUS FOR DETECTING CO-CHANNEL INTERFERENCE IN WIRELESS LOCAL AREA NETWORK**
VERFAHREN UND VORRICHTUNG ZUR ERKENNUNG VON GLEICHKANALINTERFERENZEN IN EINEM DRAHTLOSEN LOKALEN NETZWERK
PROCÉDÉ ET APPAREIL DE DÉTECTION D'INTERFÉRENCE DE CANAL COMMUN DANS UN RÉSEAU LOCAL SANS FIL

(30) Priority: 22.04.2022 CN 202210432829
(43) Date of publication of application: 25.10.2023
(73) Proprietor: Huawei Technologies Co., Ltd., Shenzhen, Guangdong 518129 (CN)
(72) Inventor: SANG, Ran, Shenzhen, 518129 (CN); CHEN, Weixi, Shenzhen, 518129 (CN); ZHANG, Wei, Shenzhen, 518129 (CN)
(74) Representative: Epping - Hermann - Fischer

(56) References cited:
- US-A1- 2011 149 773
- US-A1- 2015 208 253
- US-A1- 2017 208 625
- US-A1- 2017 359 733
- US-A1- 2018 115 983
- MOHAMMADKARIMI M ET AL: "GLRT Based Active Spectrum Sensing for Cognitive Radio Systems", WIRELESS COMMUNICATIONS NETWORKING AND MOBILE COMPUTING (WICOM), 2010 6TH INTERNATIONAL CONFERENCE ON, IEEE, PISCATAWAY, NJ, USA, 23 September 2010 (2010-09-23), pages 1 - 4, XP031828198, ISBN: 978-1-4244-3708-5

## Description

### TECHNICAL FIELD

This application relates to the communication field, and more specifically, to a method and an apparatus for detecting co-channel interference in a wireless local area network (wireless local area network, WLAN).

### BACKGROUND

A WLAN may include a wireless access point (access point, AP) and a station (station, STA). Implementation and deployment of a high-bandwidth continuous network increase a quantity of co-channel APs and cause severe co-channel interference correspondingly, further affecting a throughput of an entire network and user experience. Currently, detecting co-channel interference requires information exchange between APs, and therefore complexity is high.

The document US 2017/359733 A1 describes a user terminal, comprising a controller configured to execute measurement based on a radio signal in a secondary cell in an unlicensed band; and a transmitter configured to transmit, to a base station, a report of measurement results based on the radio signal. The controller is configured to determine whether or not identification information to which a predetermined scramble is applied is detected from a predetermined radio signal in the secondary cell. The transmitter is configured to transmit, to the base station, the report of measurement results not including a predetermined measurement result based on the predetermined radio signal, in response to no detection of the identification information from the predetermined radio signal.

The document US 2017/208625 A1 describes a method for performing, by a station (STA) apparatus, uplink (UL) multi-user (MU) transmission in a wireless communication system inicluding performing carrier sensing on a channel, receiving a trigger frame including information for UL MU transmission and a carrier sense indicator indicating whether a result of the carrier sensing is to be reflected from an access point (AP), and transmitting an UL MU frame through the channel based on the information for UL MU transmission. The UL MU frame is transmitted through the channel based on a result of the carrier sensing if the carrier sense indicator indicates the reflection of a result of the carrier sensing. The UL MU frame is transmitted through the channel regardless of a result of the carries sensing if the carrier sense indicator does not indicate the reflection of a result of the carrier sensing.

The document US 2015/208253 A1 describes a wireless local area network (WLAN) device, which processes received samples for a radio frequency channel in an unlicensed radio frequency band to detect radio frequency interference from a long term evolution (LTE) wireless communication system. The WLAN device performs a correlation of received time-domain samples to detect the presence of a cyclic prefix for an orthogonal frequency division multiplexing (OFDM) symbol used by the LTE wireless communication system. The WLAN device searches for cross-correlation peaks (1) that exceed a peak power threshold value, (2) that a ratio of which exceed a ratio threshold, and (3) that are separated by a time period corresponding to the OFDM symbol. The WLAN device detects the presence of the LTE wireless communication system without decoding the OFDM symbols.

### SUMMARY

This application provides a solution for detecting co-channel interference in a WLAN. The present application is defined by the attached set of claims.

### BRIEF DESCRIPTION OF DRAWINGS

Features, advantages, and other aspects of each implementation in this application become clearer with reference to the accompanying drawings and with reference to the following detailed descriptions. Several implementations of this application are shown herein by way of an example rather than a limitation. In the accompanying drawings:
FIG. 1 is a schematic block diagram of a communication environment according to a possible implementation of this application;
FIG. 2 is a flowchart of a method for detecting co-channel interference according to a possible implementation of this application;
FIG. 3 to FIG. 5 are examples of types of interference according to a possible implementation of this application;
FIG. 6 is a flowchart of a method for detecting co-channel interference according to another possible implementation of this application;
FIG. 7 is a schematic block diagram of a communication apparatus according to a possible implementation of this application;
FIG. 8 is a schematic block diagram of a communication apparatus according to another possible implementation of this application; and
FIG. 9 is a simplified block diagram of an example device according to a possible implementation of this application. In each drawing, same or similar reference numerals represent same or similar elements.

### DESCRIPTION OF EMBODIMENTS

The following describes embodiments of this application in detail with reference to the accompanying drawings. Although some embodiments of this application are shown in the accompanying drawings, it should be understood that this application may be implemented in various forms, and should not be construed as being limited to embodiments described herein. On the contrary, these embodiments are provided for a more thorough and complete understanding of this application. It should be understood that the accompanying drawings and embodiments of this application are only used as examples, but are not intended to limit the protection scope of this application.

The term "communication device" used herein may be an AP, may be a user terminal such as a STA, or may be another device having a WLAN capability. The AP is, for example, a router or a switch having a WLAN capability. The STA is, for example, a personal computer, a tablet computer, a personal digital assistant (PDA), or a mobile phone.

The term "include" and variants thereof used herein indicate open inclusion, that is, "include but are not limited to". The term "based on" means "at least partially based on". The term "one embodiment" represents "at least one embodiment", and the term "another embodiment" represents "at least another embodiment". Related definitions of other terms are provided in the following descriptions.

It should be understood that, although the terms "first", "second", and the like may be used to describe various elements in this specification, the elements should not be limited by these terms. These terms are used only to distinguish one element from another. As used in this specification, the term "and/or" includes any and all combinations of one or more listed terms.

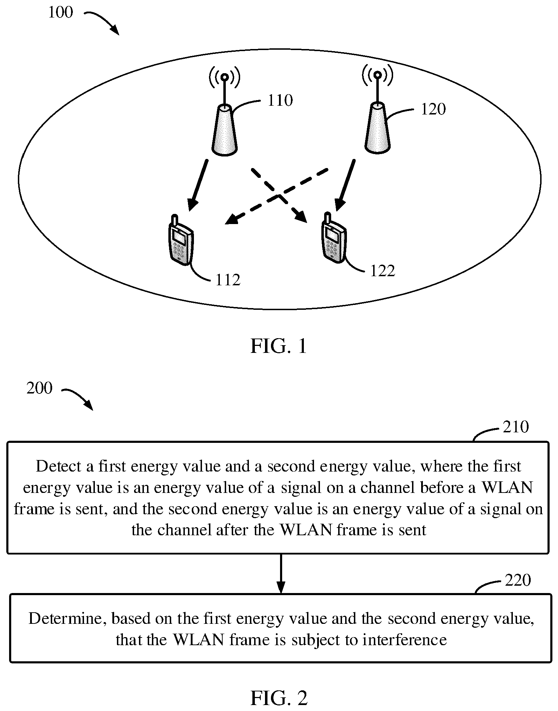

FIG. 1 is a schematic block diagram of a WLAN 100 according to a possible implementation of this application. As shown in the figure, the WLAN 100 may include APs 110 and 120, and STAs 112 and 122. It should be understood that a quantity of devices shown in the WLAN 100 is only an example rather than a limitation. The WLAN 100 may include any appropriate quantities of APs and STAs.

An 802.11 MAC layer supports shared access of a wireless medium based on carrier sense multiple access with collision avoidance (carrier sense multiple access with collision avoidance, CSMA/CA), which is also called a distributed coordination function (distributed coordination function, DCF). When a node in the WLAN 100 intends to send a WLAN frame, the node first performs clear channel assessment (clear channel assessment, CCA) by listening to the medium for one fixed duration. The fixed duration is called DCF interframe space (DCF interframe space, DIFS). If the medium is idle, the node waits for one random rollback period. If the medium is busy, the node waits for a channel to become idle and then prolongs the DIFS again, and further waits for one random rollback period. If the medium remains idle during the prolonged DIFS and random rollback, the node considers that the node may have the medium and starts one frame exchange.

The DCF is a fundamental factor that causes co-channel interference in the WLAN. A DCF mechanism enables a WLAN frame to wait for a specific time period to access a channel. The time period is called a contention time period, which starts from a time point when a WLAN frame reaches a head of a hardware queue and starts contention to a time point when the contention succeeds and sending starts. A CCA mechanism enables a WLAN frame sent by one node to overlap a WLAN frame sent by another node, causing mutual interference.

For example, as shown in FIG. 1, when the AP 110 sends a WLAN frame to the STA 112, if the AP 120 also sends a WLAN frame to the STA 122, the WLAN frame sent by the AP 120 causes interference to the WLAN frame sent by the AP 110, and the WLAN frame sent by the AP 110 also causes interference to the WLAN frame sent by the AP 120. This results in reception performance degradation at the STAs 112 and 122.

For at least the foregoing problem and another potential related problem, this application provides a method for detecting co-channel interference in a WLAN. In this method, a communication device detects a first energy value and a second energy value. The first energy value is an energy value of a signal on a channel before the WLAN frame is sent. The second energy value is an energy value of a signal on the channel after the WLAN frame is sent. Further, the communication device determines, based on the first energy value and the second energy value, that the WLAN frame is subject to interference. This can detect whether interference exists on the channel with low complexity, without requiring information exchange between communication devices. The following describes possible implementations of this application in detail with reference to FIG. 2 to FIG. 9.

FIG. 2 is a flowchart of a method 200 for detecting co-channel interference in a WLAN according to the invention. In a possible implementation, the method 200 may be performed by an AP or a STA in a WLAN 100. For example, the method 200 may be performed by a processor or a processing unit of an AP 110 or 112 in cooperation with another component (for example, a transceiver). In another possible implementation, the method 200 may further be performed by another communication device independent of the WLAN 100. For purposes of discussion, the method 200 is described as being performed by the AP 110 in the following, with reference to the various elements shown in FIG. 1.

In a block 210, the AP 110 detects a first energy value and a second energy value, where the first energy value is an energy value of a signal on a channel before a WLAN frame is sent, and the second energy value is an energy value of a signal on the channel after the WLAN frame is sent. In a block 220, the AP 110 determines, based on the first energy value and the second energy value, that the sent WLAN frame is subject to interference.

By using the method 200, whether interference exists on the channel may be detected with low complexity, without requiring information exchange between communication devices.

In a possible implementation, the AP 110 may detect the first energy value of the signal on the channel within a first preset time period before sending the WLAN frame. The AP 110 may detect the second energy value of the signal on the channel within a second preset time period after sending the WLAN frame.

In a possible implementation, the AP 110 may detect the second energy value of the signal on the channel within a third preset time period after receiving a response frame. If the AP 110 does not receive the response frame, the AP 110 may detect the second energy value of the signal on the channel within the third preset time period after timeout or within the second preset time period after sending the WLAN frame.

In a possible implementation, a length of each of the first preset time period, the second preset time period, and the third preset time period may be determined based on a slot unit of wireless communication. In a possible implementation, the length of the third preset time period may be shorter than the length of the first preset time period and the length of the second preset time period. For example, each of the first preset time period and the second preset time period may be one slot, such as 9 microseconds (µs), and the third preset time period may be 5 µs. Certainly, based on an actual requirement, the length of each of the first preset time period, the second preset time period, and the third preset time period may be any other appropriate value. The scope of this application is not limited in this aspect.

In a possible implementation, the method 200 is applicable to, but not limited to, the following WLAN frame interaction procedure:
data (DATA) frame-block acknowledgment (BA) frame
data frame-acknowledgment (ACK) frame
request to send (RTS) frame-clear to send (CTS) frame-data frame-ACK frame
RTS frame-CTS frame-data frame-BA frame
multi-user request to send (MU-RTS) frame-CTS frame-data frame-ACK frame
trigger (Trigger) frame-data frame-BA frame
null data packet announcement (NDPA) frame-null data packet (NDP) frame-BRP frame

A sequence of RTS frame-CTS frame-data frame-ACK frame is used as an example. Before sending the RTS frame, the AP 110 may detect the first energy value of the signal on the channel. After receiving the CTS frame, the AP 110 may detect the energy value of the signal on the channel, for example, the energy value represented by afterRxCtsRssi. After receiving the ACK frame, the AP 110 may re-detect the energy value of the signal on the channel, for example, the energy value represented by afterRxAckRssi. If no CTS frame is received, the AP 110 may detect the energy value of the signal on the channel, for example, the energy value represented by afterRxCtsRssi, when the CTS frame times out or within the second preset time period after sending the RTS frame. If no ACK frame is received, the AP 110 may detect the energy value of the signal on the channel, for example, the energy value represented by afterRxAckRssi, when the ACK frame times out or within the second preset time period after sending the data frame. In this example, the AP 110 may determine a larger one of the energy value afterRxCtsRssi and the energy value afterRxAckRssi as the second energy value.

Acccording to the invention, the AP 110 may further determine a type of interference to the WLAN frame. In this, the AP 110 determines that the WLAN frame is subject to interference of a first type if the first energy value is greater than a first energy threshold. In this possible implementation, the first energy threshold may be a carrier sense (carrier sense) level. In the following, the carrier sense level is also referred to as a carrier sense threshold.

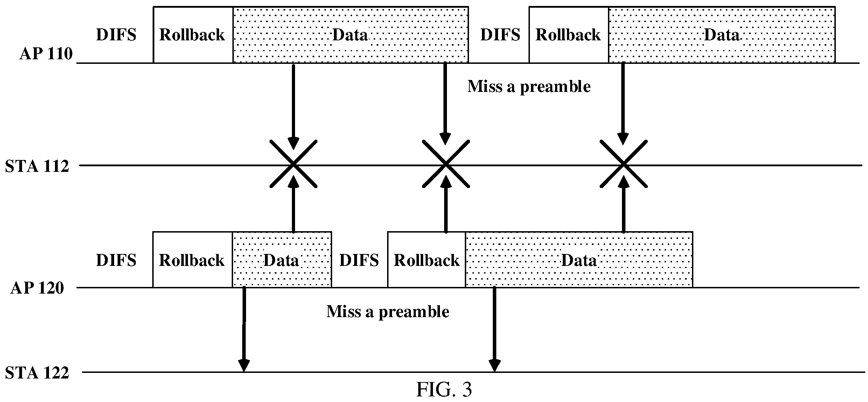

In a possible implementation, the interference of the first type may be asynchronous concurrent interference. The asynchronous concurrent interference may be defined as follows: A plurality of WLAN devices that sense each other miss a preamble (preamble) segment and use an energy detection (energy detection, ED) threshold to determine that a channel is idle. As a result, concurrent transmission is performed between the WLAN devices, causing mutual interference between transmission links. An example of the asynchronous concurrent interference is described below with reference to FIG. 3.

FIG. 3 is an example of asynchronous concurrent interference according to a possible implementation of this application. In this example, APs 110 and 120 separately detect, after a same DIFS and a same rollback period, that a channel remains idle, so that the APs 110 and 120 separately transmit data to STAs 112 and 122 at the same time. Transmission duration of the AP 110 is different from that of the AP 120. After sending the data, the AP 120 re-detects whether the channel is idle or busy. When the AP 120 starts detection, a preamble (preamble) segment of an air interface signal has been sent, and only a data segment is left. Therefore, the AP 120 cannot detect a short training field (STF) and a long training field (LTF) in the preamble segment sent by the AP 110. In this case, the AP 120 considers that there is no Wi-Fi signal on the channel. Further, the AP 120 compares an energy detection (ED) threshold with an energy value of the air interface signal, to determine whether the channel is busy or idle. Because the ED threshold is relatively high, the AP 120 determines that the channel is idle, and sends data. Therefore, the data sent by the AP 120 causes interference again to the data sent by the AP 110. Similarly, after sending the data, the AP 110 also re-detects whether the channel is idle or busy. Because the AP 110 misses the preamble segment sent by the AP 120, the AP 110 senses the channel by using the ED threshold, determines that the channel is idle, and sends data. Therefore, the data sent by the AP 110 causes interference to the data sent by the AP 120.

The solution in this application may determine that the data sent by the AP 120 causes asynchronous concurrent interference to the data sent by the AP 110, and the interference may be eliminated in an appropriate manner.

According to the invention, the AP 110 determines that a WLAN frame is subject to interference of a second type if a first energy value is less than a first energy threshold and a second energy value is greater than a second energy threshold. In this possible implementation, the first energy threshold may be a carrier sense level, and the second energy threshold may be the carrier sense level or an ED level. In this application, the ED level is also referred to as the ED threshold.

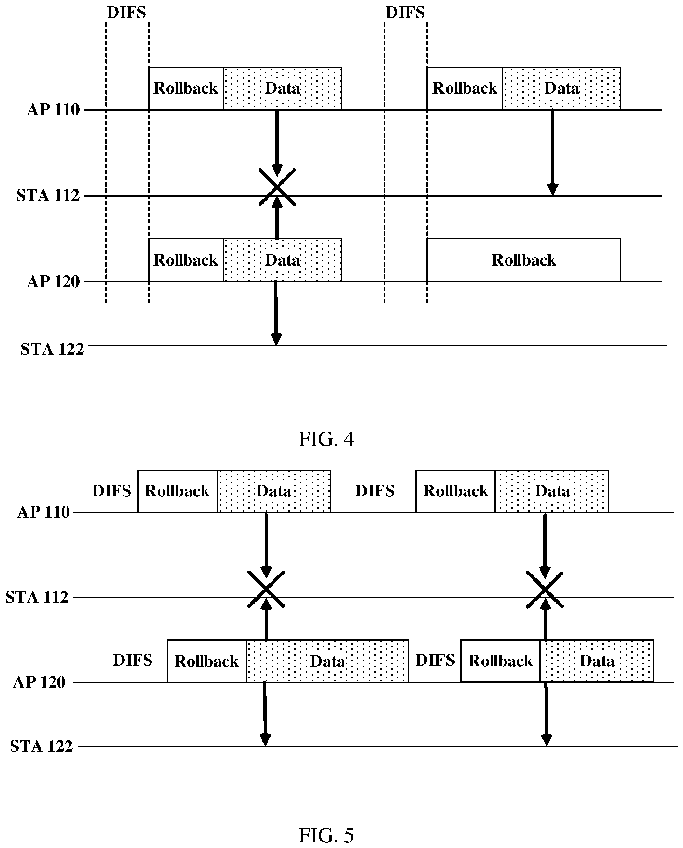

In a possible implementation, the interference of the second type may be a collision conflict. The collision conflict may be defined as follows: At least two WLAN devices that sense each other preempt a same radio resource and send data at the same time, causing mutual interference between transmission links. The following describes an example of the collision conflict with reference to FIG. 4.

FIG. 4 is an example of a collision conflict according to a possible implementation of this application. In this example, APs 110 and 120 separately detect, after a same DIFS and a same rollback period, that a channel remains idle, so that the APs 110 and 120 separately transmit data to STAs 112 and 122 at the same time. When receiving a signal sent by the AP 110, the STA 112 further receives a signal sent by the AP 120. The two signals interfere with each other. As a result, the STA 112 fails to decode the signal sent by the AP 110.

The solution in this application may determine that the data sent by the AP 120 causes a collision conflict to the data sent by the AP 110, and the collision conflict may be eliminated in an appropriate manner. This can increase a probability that the STA 112 successfully decodes the signal sent by the AP 110.

In a possible implementation, the AP 110 may determine, based on one of the following, that a WLAN frame is subject to interference of a third type: A first energy value is greater than 0 and less than a carrier sense level, a second energy value is greater than 0 and less than the carrier sense level, and both the first energy value and the second energy value are greater than 0 and less than the carrier sense level. It should be understood that "a first energy value is greater than 0" and "a second energy value is greater than 0" mean that the first energy value and the second energy value can be detected through sensitivity of a component. If the component cannot detect the first energy value or the second energy value, it is considered that the first energy value or the second energy value is zero, and the first energy value or the second energy value does not need to be absolute zero energy.

In a possible implementation, the interference of the third type may be interference from a hidden node. The interference from the hidden node may be defined as follows: Packets sent by WLAN devices that do not sense each other overlap in time, which causes mutual interference between transmission links. The following describes an example of the interference from the hidden node with reference to FIG. 5.

FIG. 5 is an example of interference from a hidden node according to a possible implementation of this application. In this example, because a first energy value is greater than 0 and less than a carrier sense level, APs 110 and 120 do not sense each other and both can send data. When receiving a signal sent by the AP 110, a STA 112 further receives a signal sent by the AP 120. The two signals interfere with each other. As a result, the STA 112 fails to decode the signal sent by the AP 110.

The solution in this application may determine that the data sent by the AP 120 causes a collision conflict to the data sent by the AP 110, and the collision conflict may be eliminated in an appropriate manner. This can increase a probability that the STA 112 successfully decodes the signal sent by the AP 110.

In a possible implementation, the AP 110 may further determine an intensity of interference based on the first energy value or a second energy value. For example, the AP 110 may determine the intensity of the interference based on the first energy value if the first energy value is greater than a first energy threshold. The AP 110 may determine the intensity of the interference based on the second energy value if the first energy value is less than the first energy threshold and the second energy value is greater than a second energy threshold.

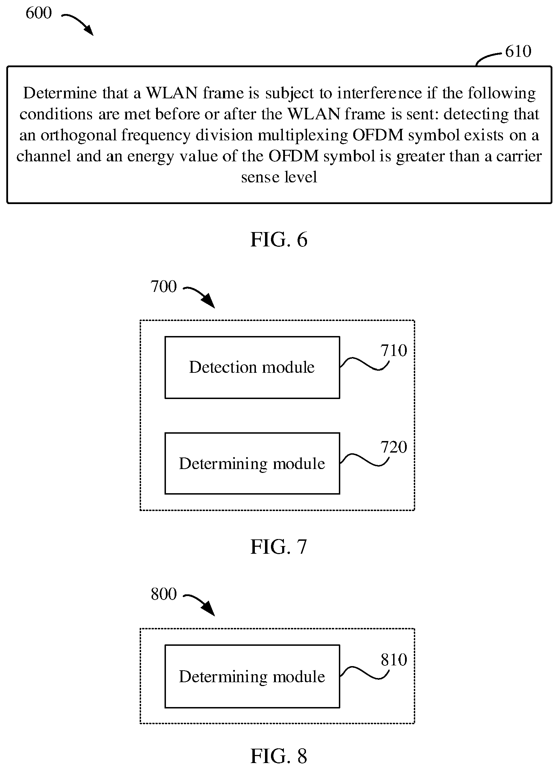

In addition, this application further provides a method for detecting co-channel interference in a WLAN. In the method, if a communication device detects that an orthogonal frequency division multiplexing (OFDM) symbol exists on a channel before or after the communication device sends a WLAN frame and an energy value of the OFDM symbol is greater than the carrier sense level, the communication device determines that the WLAN frame is subject to interference. This can detect whether interference exists on the channel with low complexity, without requiring information exchange between communication devices. The following describes possible implementations of this application in detail with reference to FIG. 6.

FIG. 6 is a flowchart of a method 600 for detecting co-channel interference in a WLAN according to a possible implementation of this application. In a possible implementation, the method 600 may be performed by an AP or a STA in a WLAN 100. For example, the method 600 may be performed by a processor or a processing unit of an AP 110 or 112 in cooperation with another component (for example, a transceiver). In another possible implementation, the method 600 may further be performed by another communication device independent of the WLAN 100. For purposes of discussion, the method 600 is described as being performed by the AP 110 in the following, with reference to the various elements shown in FIG. 1.

In a block 610, the AP 110 determines that a WLAN frame is subject to interference if the following conditions are met before or after the AP 110 sends the WLAN frame: The AP 110 detects that an OFDM symbol exists on a channel and an energy value of the OFDM symbol is greater than a carrier sense level.

In a possible implementation, the AP 110 may determine that the WLAN frame is subject to interference of a first type if the foregoing conditions are met before the WLAN frame is sent. Alternatively, the AP 110 may further determine that the WLAN frame is subject to interference of a first type if the foregoing conditions are met before and after the WLAN frame is sent. This can facilitate interference elimination.

In a possible implementation, the interference of the first type may be the asynchronous concurrent interference.

In a possible implementation, the AP 110 may determine that the WLAN frame is subject to interference of a second type if the foregoing conditions are met after the WLAN frame is sent. This can facilitate interference elimination. In a possible implementation, the interference of the second type may be the collision conflict.

It should be understood that the operations and features described above with reference to FIG. 1 to FIG. 5 are also applicable to the method 600, and have a same effect. Details are not described again.

This application further provides a corresponding apparatus configured to perform the foregoing method or process.

FIG. 7 is a schematic block diagram of a structure of an apparatus 700 for detecting co-channel interference in a WLAN according to a possible implementation of this application. The apparatus 700 may be implemented at the AP 110, the AP 120, the STA 112, or the STA 122 shown in FIG. 1. For ease of discussion, the following describes the apparatus 700 with reference to FIG. 1.

As shown in FIG. 7, the apparatus 700 includes a detection module 710 and a determining module 720. The detection module 710 is configured to detect a first energy value and a second energy value. The first energy value is an energy value of a signal on a channel before a WLAN frame is sent, and the second energy value is an energy value of a signal on the channel after the WLAN frame is sent. The determining module 720 is configured to determine, based on the first energy value and the second energy value, that the WLAN frame is subject to interference.

In a possible implementation, the determining module 720 is further configured to determine that the WLAN frame is subject to interference of a first type if the first energy value is greater than a first energy threshold.

In a possible implementation, the determining module 720 is further configured to determine an intensity of the interference based on the first energy value.

In a possible implementation, the first energy threshold is a carrier sense level.

In a possible implementation, the determining module 720 is further configured to determine that the WLAN frame is subject to interference of a second type if the first energy value is less than the first energy threshold and the second energy value is greater than a second energy threshold.

In a possible implementation, the determining module 720 is further configured to determine the intensity of the interference based on the second energy value.

In a possible implementation, the second energy threshold is a carrier sense level or an energy detection level.

In a possible implementation, the determining module 720 is further configured to determine, based on one of the following, that the WLAN frame is subject to interference of a third type: The first energy value is greater than 0 and less than the carrier sense level, the second energy value is greater than 0 and less than the carrier sense level, and both the first energy value and the second energy value are greater than 0 and less than the carrier sense level.

FIG. 8 is a schematic block diagram of a structure of an apparatus 800 for detecting co-channel interference in a WLAN according to the invention. . The apparatus 800 may be implemented at the AP 110, the AP 120, the STA 112, or the STA 122 shown in FIG. 1. For ease of discussion, the following describes the apparatus 800 with reference to FIG. 1.

As shown in FIG. 8, the apparatus 800 includes a determining module 810. The determining module 810 is configured to determine that a WLAN frame is subject to interference if the following conditions are met before or after the WLAN frame is sent: detecting that an orthogonal frequency division multiplexing OFDM symbol exists on a channel and an energy value of the OFDM symbol is greater than a carrier sense level.

The determining module 810 is further configured to determine that the WLAN frame is subject to interference of a first type if the conditions are met before the WLAN frame is sent or if the conditions are met before and after the WLAN frame is sent.

The determining module 810 is further configured to determine that the WLAN frame is subject to interference of a second type if the conditions are met after the WLAN frame is sent.

It should be understood that the operations and features described above with reference to FIG. 1 to FIG. 6 are also applicable to apparatuses 700 and 800, and have a same effect. Details are not described again.

Modules included in the apparatuses 700 and 800 may be implemented by using software, hardware, firmware, or any combination thereof. In some embodiments, one or more modules may be implemented by using the software and/or the firmware, for example, machine executable instructions stored in a storage medium. In addition to or as an alternative to the machine executable instructions, some or all of the modules in the apparatuses 700 and 800 may be implemented at least partially by one or more hardware logical components. By way of an example and not a limitation, available example hardware logic components include a field programmable gate array (FPGA), an application-specific integrated circuit (ASIC), an application-specific standard product (ASSP), a system on chip (SoC), and a complex programmable logic device (CPLD).

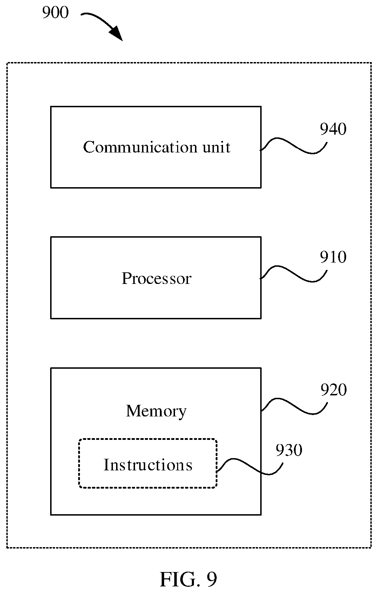

FIG. 9 is a block diagram of a device 900 according to a possible implementation of this application. The device 900 may be configured to implement the AP 110, the AP 120. the STA 112, or the STA 122 shown in FIG. 1.

As shown in FIG. 9, the device 900 includes a processor 910, and the processor 910 controls operations and functions of the device 900. For example, in some example embodiments, the processor 910 may perform various operations by using instructions 930 stored in a memory 920 coupled to the processor 910. The memory 920 may be of any appropriate type applicable to a local technical environment, and may be implemented by using any appropriate data storage technology, including but not limited to a semiconductor-based storage device, a magnetic storage device and system, and an optical storage device and system. Although only one memory unit is shown in FIG. 9, there may be a plurality of physically different memory units in the device 900.

The processor 910 may be of any appropriate type applicable to a local technical environment, and may include but not be limited to one or more of a general-purpose computer, a dedicated computer, a microcontroller, a digital signal processor (DSP), and a controller-based multi-core controller architecture. The device 900 may further include a plurality of processors 910. The processor 910 is coupled to a communication unit 940. The communication unit 940 may receive and send information via a radio signal, an optical fiber, a cable, and/or another component.

When the device 900 functions as the AP 110, the processor 910 may implement the operations and actions described above with reference to FIG. 1 to FIG. 6 by executing instructions. All the features described above with reference to FIG. 1 to FIG. 8 are applicable to the device 900, and details are not described herein again.

Various example embodiments of this application may usually be implemented in hardware, a dedicated circuit, software, logic, or any combination thereof. Some aspects may be implemented in hardware, while other aspects may be implemented in firmware or software that may be executed by a controller, a microprocessor, or another computing device. When various aspects of example embodiments of this application are illustrated or described as block diagrams, flowcharts, or represented by some other graphics, it is understood that the blocks, apparatuses, systems, techniques, or methods described herein may be implemented as non-limiting examples in the hardware, the software, the firmware, the dedicated circuit, the logic, general-purpose hardware, the controller, another computing device, or a combination thereof.

As an example, an example embodiment of this application may be described in a context of machine or computer executable instructions. The machine executable instructions are, for example, included in a program module executed in a component on a target real or virtual processor. The program module usually includes a routine, a program, a library, an object, a class, a component, a data structure, and the like, and executes a specific task or implements a specific abstract data structure. In various example embodiments, functions of program modules may be combined or split between the described program modules. The machine executable instructions for the program module may be executed locally or within a distributed device. In the distributed device, the program module may be located in both a local storage medium and a remote storage medium.

Computer program code for performing the method in this application may be written in one or more programming languages. The computer program code may be provided to a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In the context of this application, a machine-readable medium or a computer-readable medium may be any tangible medium that includes or stores a program that is used for or related to a system, an apparatus, or a device for instruction execution. The machine-readable medium may be a machine-readable signal medium or a machine-readable storage medium. The machine-readable medium may include but not be limited to an electronic, magnetic, optical, electromagnetic, infrared, or semiconductor system, an apparatus, or a device, or any suitable combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any suitable combination thereof.

## Claims

1. A method for detecting co-channel interference in a wireless local area network, WLAN, comprising:
detecting (210), by a communication device, a first energy value and a second energy value, wherein the first energy value is an energy value of a signal on a channel before a WLAN frame is sent, and the second energy value is an energy value of a signal on the channel after the WLAN frame is sent; and
determining (220), by the communication device based on the first energy value and the second energy value, that the WLAN frame is subject to interference, **characterised by**;
determining a type of the interference, which comprises:
that determining the WLAN frame is subject to interference of a first type if the first energy value is greater than a first energy threshold, and
determining that the WLAN frame is subject to interference of a second type if the first energy value is less than the first energy threshold and the second energy value is greater than a second energy threshold.

2. The method according to claim 1, further comprising:
determining an intensity of the interference based on the first energy value.

3. The method according to claim 1 or 2, wherein the first energy threshold is a carrier sense level.

4. The method according to any one of claims 1 to 3, further comprising:
determining an intensity of the interference based on the second energy value.

5. The method according to any one of claims 1 to 4, wherein the second energy threshold is a carrier sense level or an energy detection level.

6. The method according to any one of claims 1 to 5, further comprising:
determining the type of the interference, which comprises:
determining, based on one of the following, that the WLAN frame is subject to interference of a third type:
the first energy value is greater than 0 and less than a carrier sense level;
the second energy value is greater than 0 and less than the carrier sense level; and
both the first energy value and the second energy value are greater than 0 and less than the carrier sense level.

7. A method for detecting co-channel interference in a wireless local area network, WLAN, comprising:
determining (610), by a communication device, that a WLAN frame is subject to interference if the following conditions are met before or after the communication device sends the WLAN frame: the communication device detects that an orthogonal frequency division multiplexing, OFDM, symbol exists on a channel and an energy value of the OFDM symbol is greater than a carrier sense level, further comprising:
determining a type of the interference, which comprises:
determining that the WLAN frame is subject to interference of a first type if the conditions are met before the WLAN frame is sent;
determining that the WLAN frame is subject to interference of a first type if the conditions are met before and after the WLAN frame is sent, and
determining that the WLAN frame is subject to interference of a second type if the conditions are met after the WLAN frame is sent.

8. An apparatus for detecting co-channel interference in a wireless local area network WLAN, configured to perform the method according to any one of claims 1 to 6.

9. An apparatus for detecting co-channel interference in a wireless local area network WLAN, configured to perform the method according to claim 7.

10. A computer-readable storage medium storing instructions, when the instructions are executed by a processor in an apparatus, the apparatus is enabled to perform the method according to any one of claims 1 to 6.

11. A computer-readable storage medium storing instructions, when the instructions are executed by a processor in an apparatus, the apparatus is enabled to perform the method according to claim 7.

## Patentansprüche

1. Verfahren zum Erkennen von Gleichkanalinterferenzen in einem drahtlosen lokalen Netzwerk, WLAN, umfassend:
Erkennen (210), durch eine Kommunikationseinrichtung, eines ersten Energiewerts und eines zweiten Energiewerts, wobei der erste Energiewert ein Energiewert eines Signals auf einem Kanal ist, bevor ein WLAN-Frame gesendet wird, und der zweite Energiewert ein Energiewert eines Signals auf dem Kanal ist, nachdem der WLAN-Frame gesendet worden ist; und
Bestimmen (220), durch die Kommunikationseinrichtung basierend auf dem ersten Energiewert und dem zweiten Energiewert, dass der WLAN-Frame einer Interferenz unterliegt, **gekennzeichnet durch**:
Bestimmen einer Art der Interferenz, das Folgendes umfasst:
Bestimmen, dass der WLAN-Frame einer Interferenz einer ersten Art unterliegt, wenn der erste Energiewert größer als ein erster Energieschwellenwert ist, und
Bestimmen, dass der WLAN-Frame einer Interferenz einer zweiten Art unterliegt, wenn der erste Energiewert kleiner als der erste Energieschwellenwert und der zweite Energiewert größer als ein zweiter Energieschwellenwert ist.

2. Verfahren nach Anspruch 1, ferner umfassend:
Bestimmen einer Intensität der Interferenz basierend auf dem ersten Energiewert.

3. Verfahren nach Anspruch 1 oder 2, wobei der erste Energieschwellenwert ein Trägerprüfungspegel ist.

4. Verfahren nach einem der Ansprüche 1 bis 3, ferner umfassend:
Bestimmen einer Intensität der Interferenz basierend auf dem zweiten Energiewert.

5. Verfahren nach einem der Ansprüche 1 bis 4, wobei der zweite Energieschwellenwert ein Trägerprüfungspegel oder ein Energieerkennungspegel ist.

6. Verfahren nach einem der Ansprüche 1 bis 5, ferner umfassend:
Bestimmen der Art der Interferenz, das Folgendes umfasst:
Bestimmen, basierend auf einem der Folgenden, dass der WLAN-Frame einer Interferenz einer dritten Art unterliegt:
der erste Energiewert ist größer als 0 und kleiner als ein Trägerprüfungspegel;
der zweite Energiewert ist größer als 0 und kleiner als der Trägerprüfungspegel; und
sowohl der erste als auch der zweite Energiewert sind größer als 0 und kleiner als der Trägerprüfungspegel.

7. Verfahren zum Erkennen von Gleichkanalinterferenzen in einem drahtlosen lokalen Netzwerk, WLAN, umfassend:
Bestimmen (610), durch eine Kommunikationseinrichtung, dass ein WLAN-Frame einer Interferenz unterliegt, wenn die folgenden Bedingungen erfüllt sind, bevor die Kommunikationseinrichtung den WLAN-Frame sendet oder nachdem sie diesen gesendet hat: die Kommunikationseinrichtung erkennt, dass ein Symbol für ein orthogonales Frequenzmultiplexverfahren, OFDM-Symbol, auf einem Kanal vorhanden ist und ein Energiewert des OFDM-Symbols größer als ein Trägerprüfungspegel ist, ferner umfassend:
Bestimmen einer Art der Interferenz, das Folgendes umfasst:
Bestimmen, dass der WLAN-Frame einer Interferenz einer ersten Art unterliegt, wenn die Bedingungen erfüllt sind, bevor der WLAN-Frame gesendet wird;
Bestimmen, dass der WLAN-Frame einer Interferenz einer ersten Art unterliegt, wenn die Bedingungen erfüllt sind, bevor der WLAN-Frame gesendet wird und nachdem dieser gesendet worden ist, und Bestimmen, dass der WLAN-Frame einer Interferenz einer zweiten Art unterliegt, wenn die Bedingungen erfüllt sind, nachdem der WLAN-Frame gesendet worden ist.

8. Vorrichtung zum Erkennen von Gleichkanalinterferenzen in einem drahtlosen lokalen Netzwerk, WLAN, die dazu konfiguriert ist, das Verfahren nach einem der Ansprüche 1 bis 6 durchzuführen.

9. Vorrichtung zum Erkennen von Gleichkanalinterferenzen in einem drahtlosen lokalen Netzwerk, WLAN, die dazu konfiguriert ist, das Verfahren nach Anspruch 7 durchzuführen.

10. Computerlesbares Speichermedium, das Anweisungen speichert, wobei, wenn die Anweisungen durch einen Prozessor in einer Vorrichtung ausgeführt werden, die Vorrichtung in die Lage versetzt wird, das Verfahren nach einem der Ansprüche 1 bis 6 durchzuführen.

11. Computerlesbares Speichermedium, das Anweisungen speichert, wobei, wenn die Anweisungen durch einen Prozessor in einer Vorrichtung ausgeführt werden, die Vorrichtung in die Lage versetzt wird, das Verfahren nach Anspruch 7 durchzuführen.

## Revendications

1. Procédé de détection d'interférence de canal commun dans un réseau local sans fil, WLAN, comprenant :
la détection (210), par un dispositif de communication, d'une première valeur d'énergie et d'une seconde valeur d'énergie, dans lequel la première valeur d'énergie est la valeur d'énergie d'un signal sur un canal avant l'envoi d'une trame WLAN, et la seconde valeur d'énergie est une valeur d'énergie d'un signal sur le canal après l'envoi de la trame WLAN ; et
la détermination (220), par le dispositif de communication sur la base de la première valeur d'énergie et de la seconde valeur d'énergie, que la trame WLAN est sujette à des interférences,
**caractérisées par** :
la détermination d'un type d'interférence, ce qui comprend :
que la détermination de la trame WLAN est sujette à une interférence de premier type si la première valeur d'énergie est supérieure à un premier seuil d'énergie, et
la détermination que la trame WLAN est sujette à une interférence d'un deuxième type si la première valeur d'énergie est inférieure au premier seuil d'énergie et que la seconde valeur d'énergie est supérieure à un second seuil d'énergie.

2. Procédé selon la revendication 1, comprenant également :
la détermination d'une intensité de l'interférence sur la base de la première valeur d'énergie.

3. Procédé selon la revendication 1 ou 2, dans lequel le premier seuil d'énergie est un niveau de détection de porteuse.

4. Procédé selon l'une quelconque des revendications 1 à 3, comprenant également :
la détermination d'une intensité de l'interférence sur la base de la seconde valeur d'énergie.

5. Procédé selon l'une quelconque des revendications 1 à 4, dans lequel le second seuil d'énergie est un niveau de détection de porteuse ou un niveau de détection d'énergie.

6. Procédé selon l'une quelconque des revendications 1 à 5, comprenant également :
la détermination du type d'interférence, ce qui comprend :
la détermination, sur la base de l'un des éléments suivants, que la trame WLAN est sujette à des interférences d'un troisième type :
la première valeur d'énergie est supérieure à 0 et inférieure à un niveau de détection de porteuse ;
la seconde valeur d'énergie est supérieure à 0 et inférieure au niveau de détection de porteuse ; et
la première valeur d'énergie et la seconde valeur d'énergie sont toutes deux supérieures à 0 et inférieures au niveau de détection de porteuse.

7. Procédé de détection d'interférence de canal commun dans un réseau local sans fil, WLAN, comprenant :
la détermination (610), par un dispositif de communication, qu'une trame WLAN est sujette à des interférences si les conditions suivantes sont remplies avant ou après l'envoi de la trame WLAN par le dispositif de communication : le dispositif de communication détecte qu'un symbole OFDM (multiplexage par répartition orthogonale de la fréquence) existe sur un canal et que la valeur énergétique du symbole OFDM est supérieure au niveau de détection de porteuse, comprenant également :
la détermination d'un type d'interférence, ce qui comprend :
la détermination que la trame WLAN est sujette à une interférence de premier type si les conditions sont remplies avant l'envoi de la trame WLAN ;
la détermination que la trame WLAN est sujette à une interférence de premier type si les conditions sont remplies avant et après l'envoi de la trame WLAN, et
la détermination que la trame WLAN est sujette à une interférence de deuxième type si les conditions sont remplies après l'envoi de la trame WLAN.

8. Appareil de détection d'interférence de canal commun dans un réseau local sans fil, WLAN, configuré pour réaliser le procédé selon l'une quelconque des revendications 1 à 6.

9. Appareil de détection d'interférence de canal commun dans un réseau local sans fil, WLAN, configuré pour réaliser le procédé selon la revendication 7.

10. Support de stockage lisible par ordinateur stockant des instructions, lorsque les instructions sont exécutées par un processeur dans un appareil, l'appareil est activé pour réaliser le procédé selon l'une quelconque des revendications 1 à 6.

11. Support de stockage lisible par ordinateur stockant des instructions, lorsque les instructions sont exécutées par un processeur dans un appareil, l'appareil est activé pour réaliser le procédé selon la revendication 7.
